Europäisches Patentamt

(19) European Patent Office

Office européen des brevets

(11) Publication number : **0 335 583 B1**

(12) **EUROPEAN PATENT SPECIFICATION**

(45) Date of publication of patent specification :
30.06.93 Bulletin 93/26

(51) Int. Cl.⁵ : **C10G 45/60, B01J 37/26**

(21) Application number : **89302880.3**

(22) Date of filing : **22.03.89**

(54) **Hydrotreating catalyst and process.**

Divisional application 92201239.8 filed on
22/03/89.
The file contains technical information
submitted after the application was filed and
not included in this specification

(30) Priority : **23.03.88 US 172267**
**23.05.88 US 197455**

(43) Date of publication of application :
**04.10.89 Bulletin 89/40**

(45) Publication of the grant of the patent :
**30.06.93 Bulletin 93/26**

(84) Designated Contracting States :
**AT BE CH DE ES FR GB GR IT LI LU NL SE**

(56) References cited :
**DD-B- 207 464**
**DE-A- 2 447 303**
**DE-A- 2 748 034**
**US-A- 3 078 238**
**US-A- 3 493 493**

(73) Proprietor : **ENGELHARD CORPORATION**
**Menlo Park, CN 40**
**Edison New Jersey 08818 (US)**

(72) Inventor : **Nebesh, Eugene**
**1949 West Pleasant Valley Road**
**Parma Ohio 441134 (US)**
Inventor : **Plundo, Robert A.**
**7426 Hudson Park Road**
**Hudson Ohio 44236 (US)**
Inventor : **McMahon, Steven L.**
**1018 Sherwood Drive**
**Macedonia Ohio 44056 (US)**

(74) Representative : **Fisher, Adrian John et al**
**CARPMAELS & RANSFORD 43 Bloomsbury**
**Square**
**London WC1A 2RA (GB)**

EP 0 335 583 B1

## Description

Technical Field

This invention relates to hydrotreating catalysts, their preparation, and their use in hydrotreating hydrocarbon oils to improve the viscosity index and other properties of the oils and/or to reduce the aromatic content of the oils. More particularly, this invention relates to hydrotreating catalysts having unusual and improved characteristics, and the use of such catalysts for upgrading hydrocarbon oil charge stocks.

Background of the Invention

Viscosity index, light stability, aromatics content and iodine number are measurements which are employed in lubricating oil specifications as general indicators of the quality of the oil. Viscosity index is a reflection of an oil's resistance to viscosity change with fluctuations in temperature. The higher the viscosity index of an oil, the more resistant it is to a viscosity change caused by temperature fluctuation. Iodine number is an indicator of the amount of unsaturated linkages appearing in the molecules present in the oil to which iodine can be added. Unsaturated linkages generally are undesirable because such linkages are more readily oxidized than saturated linkages, especially at elevated temperatures, and such oxidation results in degradation of the oil. Therefore, a high quality lubricating oil, i.e., one that is particularly desirable for automotive uses, should possess a relatively high viscosity index and a relatively low iodine number.

The stability of oils also is affected by the presence of aromatic materials in the oil. The aromatic content of oils can be reduced by hydrotreating or hydrocracking. Hydrotreating processes are preferred where it is desired to reduce aromatics without significantly increasing the amount of undesirable low boiling materials. Hydrotreating processes can be effective for the saturation of aromatic compounds to naphthenic materials without significant cracking or hydrocracking.

The upgrading of crude lubricating oil stocks by means of catalytic hydrogenation has been suggested in the art. Generally, the processes require, in a first stage, the treatment of the crude lubricating oil stocks with hydrogen under conditions of elevated temperature and pressure while employing a catalyst comprising hydrogenating components (metals) supported on a carrier having a substantial degree of cracking activity such as for example, alumina, silica, and mixtures thereof. Although many of the catalysts which have been suggested in the prior art provide some improvement, there continues to be a need for improved multifunctional catalysts which provide increased yields, higher viscosity indexes and reduced aromatics content under lower reaction temperatures.

The acidic or cracking function in the hydrotreating process usually is supplied by the catalyst support or the catalyst support enhanced by acidic promoters such as halogens. The hydrogenation activity of a supported catalyst is supplied by the hydrogenation metal component which may exist in the final catalyst as a metal, the metal ion complexed with the support structure and other promoters, or metal compounds, notably the oxides and sulfides. Typical hydrogenation metals are metals of Groups VIB and VIII of the Periodic Table of Elements.

The hydrogenation catalysts which are useful in hydrotreating crude oils generally serve a multiplicity of functions such as cracking, nitrogen removal, sulfur removal, metal removal, hydrogenation, etc. Various catalysts which have been suggested in the prior art will perform these functions to different degrees, and catalyst compositions have been designed and formulated to optimize their performance with respect to one or more of such functions. For example, catalysts have been suggested which are extremely useful in increasing the viscosity index and reducing nitrogen and sulfur content, but the same catalysts may not be very effective for reducing the aromatic content of the oil. Other catalysts have been designed to provide a minimum cracking of the oil and an increase in effectiveness in removing aromatics. These are normally used in the second stage of a two-stage process after the viscosity index has been increased and nitrogen and sulfur content reduced by use of a specially designed hydrotreating catalyst. Although such procedures are effective in producing the desired result, the processes do require the use of two different catalysts thereby requiring the maintenance of inventories of two different catalysts.

The physical properties of the catalysts useful in the hydrogenation reactions, in some instances, may be as important as the catalytic activity. To be useful, the catalyst must have sufficient mechanical strength to resist crushing and/or attrition in use. Since catalytic reactions generally occur at the surface of the catalyst, it is considered desirable that the catalyst have optimal surface area and pore volume. Thus, in the preparation of the catalysts, it is important to use supports of high surface areas and pore volumes because impregnation of a support with metals fills the pores and reduces the surface area.

Because of the continuing demands placed on the lubricating oil producers for improved products, the producers typically use two or more hydrotreating stages. A catalyst generally is selected for the first stage for its ability to hydrocrack the crude feedstock which typically is a vacuum gas oil. In the second and subsequent stages, a catalyst is chosen which is capable of polishing the oil with the occurrence of mild hydrogenation and aromatics removal. In general, cracking, (i.e., formation of lower boiling materials) is undesirable in the second stage.

Numerous publications, including patents, have discussed the catalytic hydrogenation of lubricating oil stocks. U.S. Patents 3,078,238 and 3,046,218 describe a supported nickel-tungsten catalyst which has been treated with a halogen such as fluorine to improve the hydrogenation activity of the catalyst. The resultant catalyst contains at least 0.3% fluorine, and preferably 2.5% or more of fluorine. The catalyst support is preferably a mixture of alumina and silica. In the '238 patent, the catalyst composition comprises halogenated, sulfided supported nickel and tungsten wherein the carrier material possesses cracking activity. The amount of nickel and tungsten present in the catalyst should be a total of from 5% to about 40% of the total catalyst weight, and the nickel and tungsten are present in some form of combination or mixture with sulfur. The sulfur should be present in amounts of from about 2% to about 23% of the catalyst weight. The support materials are composites of silica and alumina and the materials may contain between 1% and 99% silica although compositions containing from 5% to 90% silica are more desirable, and the most desirable composites contain 65% to 90% silica. In U.S. Patent 3,046,218, the catalyst support may be natural or synthetic high silica-low alumina catalyst or silica-alumina cracking catalyst which contain up to 50% alumina.

In Table I of U.S. Patent 3,078,238, various catalysts containing various support compositions are identified containing various silica to alumina ratios including a catalyst support containing 5% silica and 95% alumina. This latter catalyst is reported to have a low cracking value resulting in a lube oil product having an undesirable high iodine number and a relatively low viscosity index which is about the same as the catalyst wherein the support composition is over 99.5% by weight of alumina. Based upon the results reported in the '238 patent, the patentees concluded that the catalyst should preferably have a cracking activity on the Kellogg scale of between 60 and 80 and that the support should be high-silica support comprising from 75-85% silica and from 25% to 15% alumina.

U.S. Patent 3,553,107 discloses a hydrotreating catalyst and a process for treating lubricating oil stock containing from 5% to 30% aromatics by volume whereby the aromatic content of the oil is significantly reduced. The oil then is treated with fuming sulfuric acid, neutralized with caustic, and extracted with alcohol to remove sulfonates and yield a white oil. The hydrotreating catalyst used to reduce the aromatic content in the lubricating oil stock employs Group VI and Group VIII metals on an alumina support. Preferred catalysts include combinations of nickel and tungsten in amounts of from 10% to about 30% by weight and preferably about 25%. In another preferred embodiment, the catalyst is conposed of 20% nickel, 20% tungsten and 2% fluorine on alumina.

U.S. Patent 3,493,493 describes hydrotreating catalysts useful for enhancing lubricating oils. The catalysts comprise at least one Group VI metal and one Group VIII metal on an alumina carrier having a cracking activity index of less than about 30 and containing halogen. The total metals content of the catalysts is at least 20% by weight, and the atomic ratio of Group VIII metals to Group VI metals is in the range of from about 2.25:1 to about 6:1. The carrier employed in the invention must be alumina which has low activity for the promotion of cracking. The effectiveness of the catalysts claimed in this patent is compared to catalysts using different supports containing mixtures of alumina and silica including supports comprising 75% silica and about 25% alumina.

U.S. Patent 4,427,534 describes the process for the production of a jet or diesel fuel from aromatics-containing feedstock. The process comprises contacting hydrogen and a feedstock with a presulfurized catalyst composite comprising a Group VIB metal, a Group VIII metal and a halogen impregnated on a cracking support under hydrogenation/hydrocracking conditions. The preferred carrier is a silica-alumina composite containing from about 65% to about 85% silica, preferably about 70-80% silica and 20-30% alumina.

Summary of the Invention

A hydrotreating catalyst is described which comprises at least one Group VI metal, metal oxide, or metal sulfide, and at least one Group VIII metal, metal oxide, or metal sulfide, supported on a carrier wherein (A) the catalyst comprises from 10% to 35% by weight of combined metal, and the atomic ratio of the Group VIII metal to Group VI metal is in the range of from 0.5:1 to 2:1; (B) the carrier comprises from 0.5 to 10 weight percent of halogen, from 0.5 to 5% by weight of silica and from 85 to 99% of alumina; and (C) the catalyst is characterized as having a median pore radius of from 30 to 65 Angstroms (3 to 6.5 nm), and a surface area of from 120 to 180 m²/g. Also described are procedures for preparing the catalysts. The catalyst is useful in the production of lubricating oils from crude hydrocarbon oil stocks in that the hydrotreating process results in the formation of oils having increased viscosity indexes, reduced aromatic content and improved stability. The nitrogen and sulfur contents of the oils also are reduced through the use of the catalyst in the hydrogenation process.

## Brief Description of the Drawing

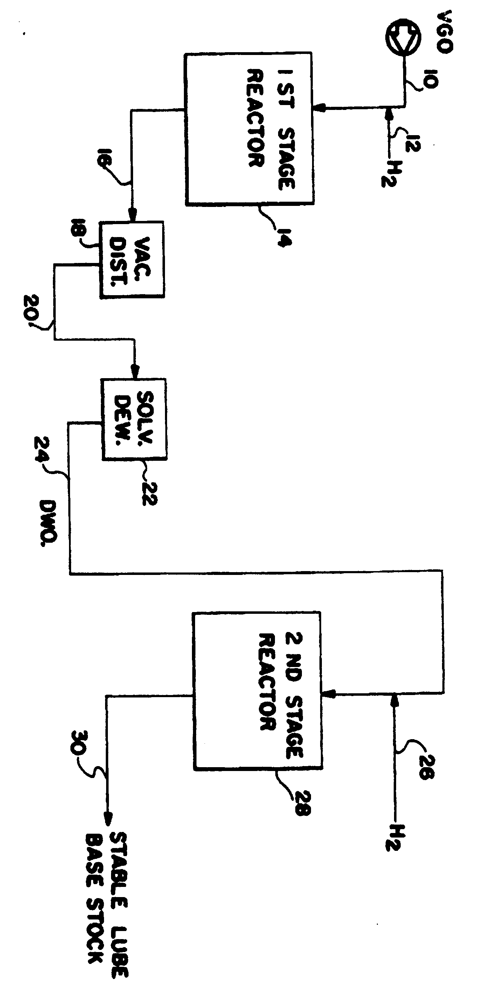

Fig. 1 is a schematic flow diagram of a typical two-stage process for hydrotreating a lubricating oil base stock.

## Description of the Preferred Embodiments

The hydrotreating catalysts of the present invention comprise at least one Group VI metal, at least one Group VIII metal on a carrier support which comprises from 0.5% to 5% by weight of silica, from 0.5 to 10% by weight of halogen, and from 85% to 99% alumina. The metallic component of the catalyst can comprise any one or more of the Group VI metals together with any one or more of the Group VIII metals. Generally, the metals employed will be the chromium, molybdenum or tungsten metals of Group VI, and iron, cobalt or nickel metals of Group VIII. The metallic components can be employed either as the metals or as the oxides or sulfides of such metals. In one embodiment, a sulfided catalyst can be prepared from a catalyst wherein the metallic components are initially in a substantially unsulfided state such as, for example, a reduced metal state, the oxide of the metal or wherein the metals are only partially sulfided, and this catalyst can then be sulfided in situ, either before start-up or during the start-up of the hydrotreating process. The metallic components of the catalysts also may be combinations of, for example, nickel, cobalt and molybdenum; nickel, cobalt and tungsten; nickel and molybdenum, cobalt and molybdenum; cobalt and tungsten; and especially nickel and tungsten.

The total metal content of the catalyst of the present invention should be in the range of from 10% to 35% by weight, and in one preferred embodiment, the total metal content of the catalyst is from 15% to 35% by weight based on the total catalyst weight. In another embodiment, the total metal content is 20% to 30%, e.g. 24 to 26 %.

The relative amount of the Group VI metal and Group VIII metal present in the catalyst also is important and the atomic ratio of the Group VIII metal to Group VI metal should be maintained within the range of from 0.5:1 to 2:1. In one preferred embodiment, the atomic ratio of Group VIII metal to Group VI metal is in the range of from 0.5:1 to 1.5:1. In a more specific embodiment, the atomic ratio of Group VIII metal to Group VI metal is from 0.75:1 to 1.25:1.

The metals (Group VI and Group VIII) or a portion of the metal(s) can be incorporated into the catalyst by including the metals or a portion of the metals (such as up to 50 or 60% of the total metal in the catalyst) in the mixture of silica and alumina used to form the support or carrier. Alternatively, and preferably, as will be described in more detail below, the support is first prepared and the metals are then impregnated into the preformed support.

The hydrotreating catalyst of the present invention also contains at least one halogen, and generally, the amount of halogen present is from 0.5% to 10% by weight based on a total weight of the carrier. In one embodiment, the halogen content is from 0.5% to 7%, and more specifically from about 0.5% to 5%. In one preferred embodiment, the halogen content is from 1.5 to 2.5 weight percent based on the weight of the carrier. The presence of halogen increases the activity of the catalysts with respect to hydrogenation. Although any halogen such as chlorine, bromine or iodine may be used, fluorine is preferred.

The incorporation of the halogen in the support or carrier of the catalyst of this invention may be accomplished by preparing an extrudable mixture comprising alumina, silica and a halogen compound and extruding the mixture into a support material. To this halogen-containing support then can be added the desired metals and additional halogen if desired.

Another feature of the hydrotreating catalyst of the present invention is the nature of the carrier or support. The carrier employed in the catalyst of the present invention generally comprises from 0.5% to 5% by weight of silica, from 0.5% to 10% by weight of halogen and from 85% to 99% by weight of alumina. In one embodiment, the carrier comprises from 1.5 to 5% by weight of halogen and/or from 1 to 2.5% by weight of silica, the balance to 100% being alumina. In a further embodiment, the carrier comprises from 1 to 2.5% by weight of silica, from 1 to 5% by weight of fluorine and from 92.5 to 98% by weight of alumina. In yet another embodiment, the carrier comprises from 1.5 to 3.0% by weight of fluorine, from 1 to 2.5% by weight of silica and from 90 to 97.5% by weight of alumina. In addition to the Group VI and Group VIII metals and halogen which are present in the support as described above, other materials may be present in amounts of up to 20% by weight of the total support material. Such materials include, for example, magnesia or titania. The carrier can also be modified to include other materials to increase the hydrocracking activity of the catalyst at lower temperatures.

The hydrotreating catalyst of the invention can be prepared employing any of the techniques for the preparation of multi-component catalysts known in the art. In one embodiment, the catalysts can be prepared by preparing a calcined halogen-containing silica-alumina carrier (with or without optional materials described above), and thereafter impregnating the calcined carrier with a solution (generally aqueous) containing the salts of the desired metals. Generally, one impregnation step is sufficient to provide a catalyst containing the desired metal content although in some instances, particularly at the higher levels of metals, multiple impregnation steps may be utilized. Generally, water-soluble salts of the Group VI and Group VIII metals such as nitrates, oxalates, acetates, ammonium salts, etc., may be employed, and after the salts have been impregnated into the carrier, these salts will usually be converted to the corresponding metal oxides by calcining. Tungsten can be conveniently incorporated from the meta-tungstate such as, for example, ammonium meta-tungstate. Ammonium para-tungstate also is suitable. Molybdenum can be conveniently incorporated from a molybdate salt, e.g., ammonium molybdate. Nickel and cobalt are incorporated using water solutions of salts such as nickel nitrate hexahydrate, nickel acetate, nickel carbonate, cobalt nitrate hexahydrate, cobalt acetate, cobalt carbonate, etc.

Formation of the sulfide can be effected in any known manner. One satisfactory procedure is to contact the catalyst containing the oxides of the metals with a mixture of hydrogen sulfide and hydrogen at elevated temperatures. Complete sulfiding is not necessary, but generally, sulfiding to above about 5% is desirable.

The catalyst support is prepared generally by extruding aqueous mixtures comprising a halogen-containing silica, alumina, water and a mineral acid (and other optional materials such as described above) followed by drying and calcination. All types of aluminas, can be used in the preparation of the carrier. In one embodiment, the aluminas are pseudoboehmites and/or alpha-mono-hydrates. The halogen-containing compounds may be any halogen-containing silica compound, for example halosilicic acids and the like. Fluorine is a preferred halogen, and fluosilicic acid ($H_2SiF_6$) is a preferred material for use in the invention. Water is used in the preparation of the silica-alumina mixture in order to provide the desired consistency for extrusion. The amount of water added to the mixture will depend upon the nature and source of the silica and alumina as well as the type of mixer and extruder being utilized. The amount of water as well as the preferred consistency of the mixture can be readily determined by one skilled in the art. The extrudable mixtures also contain a mineral acid, preferably in an amount sufficient to peptize the alumina. Up to 5% by weight of the mineral acid based on the weight of the alumina is generally included in the extrusion mix. Any of the well known commercially available mixers and extruders can be used in the preparation of the carrier support so long as they produce catalysts with sufficient physical integrity.

In one preferred embodiment, the carrier or substrate comprising silica, alumina and fluorine is prepared by the steps of

(A) preparing a solution of fluosilicic acid and a mineral acid in water;

(B) preparing a mixture of alumina and the solution prepared in step (A);

(C) extruding the mixture to form an extrudate; and

(D) drying and calcining the extrudate at an elevated temperature.

An important feature of this preferred embodiment is the use of the fluorosilicic acid as the source of halogen and silica for the carrier or support. The amount of fluorosilicic acid included in the solution prepared in step (A) is an amount which will be sufficient, when mixed with alumina in the second step to provide a catalyst carrier containing from 0.5 to 5% of silica and up to 10% of fluorine. The mineral acid utilized in the first step may be any mineral acid although nitric acid generally is utilized. The amount of nitric acid included in the solution prepared in step (A) is preferably an amount which will be sufficient to peptize the alumina when mixed with the alumina in step (B). This amount may be up to 5% by weight based on the weight of the alumina, more often as an amount of up to 3% by weight. In one embodiment, the mixture prepared in step (B) will comprise on a dry basis, from 0.5 to 5 parts by weight of silica, 0.5 to 5 parts by weight of fluorine and 85 to 99 parts by weight of alumina. The mixture prepared in step (B), as mentioned above, also may contain other materials such as magnesia, titania, or mixtures of magnesia or titania.

The extrudate which is obtained by extruding the above-described mixtures may be, and generally is dried before it is calcined at an elevated temperature. The extrudates are generally calcined at temperatures of at least 400°C and more usually at temperatures of from 500 to 600°C although temperatures as high as 1200°C can be utilized. It generally has been observed that it is preferred to utilize lower calcination temperatures where smaller pores are desired.

The size and shape of the extruded support can be varied over a wide range although the size generally is from 1/64-inch to 1/2-inch (0.4 to 12.7 mm) in diameter. The shape of the support can be in the form of extruded, briquetted, or tabletted cylinders, polylobal extrusions, spheres, rings, hollow core cylinders, or any other appropriate geometric shape. The different forming techniques will require mixes with different moisture contents.

5

Impregnation of the calcined carrier with the aqueous solution of Group VI and Group VIII metal salts can be effected by mixing the calcined carrier with the aqueous solution for a given period of time. The solution penetrates into the carrier and fills the pores of the carrier.

After the calcined carrier support has been impregnated with the Group VI and VIII metals, for example, the impregnated support is dried and calcined to convert the metals to metal oxides. Any type of drier and drying temperature can be used so long as the extrudates are dried sufficiently so that they, do not break up on calcination. It is possible in some instances to effect a one-step drying-calcination if a proper time-temperature cycle is established. Calcination temperatures of at least 400°C up to 1200°C can be used. Both under-calcination and over-calcination generally are detrimental. Any type of calciner, such as a rotary kiln, tunnel kiln, vertical calciner, etc., can be used as long as the metals are converted to metal oxides.

It also is possible in some instances, to prepare the hydrotreating catalyst by adding all portions of the active ingredients into an extrusion mix followed by extruding, drying and calcination. In another embodiment, a mixture of the above type may be prepared in which a part of the metals has been added to the extrusion mixture, and after extrusion and calcining, the balance of the metals is added via impregnation followed by drying and calcination.

The hydrotreating catalysts of the present invention which may be prepared by any of the techniques described above are characterized as having acceptable crushing strengths (15-40 pounds (67 - 178 N)), median pore radii of from 30 to 65 Angstroms (3 - 6.5 nm), total pore volume of from 0.2 to 0.5 cc/g. and surface areas of from 120 to 180 m²/g. Although all of these physical properties are important, the median pore radius and surface area of the catalysts are particularly significant with regard to the effectiveness of the hydrotreating catalysts. In one embodiment, the median pore radius is from 35 to 55 Angstroms (3.5 to 5.5 nm) and the surface area of the catalysts is from 125 to 170 m²/g.

The hydrotreating catalysts of the invention also are characterized as having relatively low surface acidity. Generally, the surface acidity will be below about 11 cc/g. as measured by ammonia chemisorption, and more often will be between about 7 or 8 to about 10 or 11. The hydrotreating catalysts of the invention also are characterized as containing essentially no macro-pores. Macropores are defined in the art as pores greater than 600A° (60 nm) in diameter. The macropore volume content of the preferred catalysts of the invention generally is less than about 0.040 cc/g. and more often is less than 0.020 or 0.010 cc/g. Typically, the macropore volume content is 0.000 to 0.005 cc/g.

The following examples illustrate the preparation of the hydrotreating catalysts of the present invention including the preparation of the carrier supports. Unless otherwise indicated in the examples or elsewhere in the specification and claims, all parts and percentages are by weight, and temperatures are degrees centigrade. The surface areas, pore volumes, and pore diameters are measured by mercury intrusion porosymmetry.

Example 1A

Into a mix muller blender there is charged 15 pounds (6.8 kg) of hydrated alumina available from Condea Chemie under the trade designation Pural• SB (boehmite) and 15 pounds (6.8 kg) of Versal™ 250 alumina (boehmite/pseudoboehmite) available from Raiser Aluminum and Chemical Corporation. The aluminas are mixed to uniformity for about 2 to 3 minutes. In a separate vessel, a solution is prepared by mixing 20 pounds (9.1 kg) of water, 120 pounds (54.4 kg) of 70% nitric acid and 1.57 pounds (0.71 kg) of 24.63% $H_2SiF_6$. The solution is added to the alumina blend and mixed thoroughly. Additional water may be added to the mixture to adjust the volatile content of the mixture to about 58%, and mixing is continued until the desired plasticity is achieved (an extrudable mixture). The mixture then is extruded using a Welding Engineers Extruder equipped with a die plate with 0.070-inch (1.78 mm) diameter round holes. The extrudate is dried overnight at 125°C and then calcined in a rotary furnace at 670-700°C to develop a surface area of about 200-210 m²/g. The catalyst support prepared in this manner has the following typical properties.

| | |
|---|---|
| F | 2.4% |
| $SiO_2$ | 2.5% |
| $Al_2O_3$ | 95.8% |
| surface area | 215 m²/g |
| pore volume | 0.75 cc/g |
| crushing strength | 20 pounds (89 N) |
| diameter | 0.063 inches (1.60 mm) |

Example 1B

An aqueous impregnating solution is prepared at a concentration which yields in the finished catalyst composition, 6% nickel and 19% tungsten. The solution is prepared by dissolving 1583.2 grams of ammonium metatungstate and 1853.7 grams of nickel nitrate hexahydrate ($Ni(NO_3)_2 \cdot 6H_2O$) in a sufficient amount of water to yield 3360 cc of the solution which is the approximate pore volume in 4000 grams of the calcined support prepared in Example 1A. The resulting solution is mixed until clear. A support prepared as in Example 1A (4000 grams) is then impregnated by continuously adding the above solution (3360 cc) to the dried extrudate with mixing. The impregnated extrudates are dried overnight at 125°C and then calcined in a rotary furnace at 500°C for one hour to convert the metals to oxides. The typical properties of a catalyst prepared in this manner are as follows:

| | |
|---|---|
| nickel | 6% |
| tungsten | 19% |
| fluorine | 2% |
| $SiO_2$ | 2% |
| surface area | 140 m²/g |
| total pore volume | 0.46 cc/g |
| crushing strength | 30 pounds (133 N) |
| diameter (ave) | 0.063 inches (1.60 mm) |

The hydrotreating catalysts of the present invention are useful in the upgrading of crude hydrocarbon oil stocks and producing lubricating oils or lubricating oil base stocks by way of catalytic hydrogenation. The crude hydrocarbon oil stocks treated with the catalysts of the present invention and in accordance with the process of the present invention may be any of the oil stocks commercially available and known in the art including gas oils and heavy gas oils. The crude lubricating oil stocks which can be hydrotreated with the catalysts of the present invention include oil stock usually boiling predominantly above 600°F (316 °C) or 650°F (343°C) and include stocks ranging from light distillates to heavy gas oils obtained from vacuum or atmospheric towers. Examples of crude oils which can be hydrotreated with the catalysts and process of the invention include heavy vacuum gas oils such as Sumatran Light, Arabian Light, Kuwait, Sumatran Heavy, California Light, California Heavy, etc.

The catalysts of the invention are particularly effective in the treatment of crude lubricating oil stocks which have been obtained from a residual material which has been treated to lower the sulfur, nitrogen and asphaltene contents to a level below that of the original residue. One example of such a treated stock is a residual stock which has been deasphalted employing a light paraffinic solvent.

While the catalyst and process of the present invention are suitable to obtain products having viscosity indexes varying over a wide range, the catalyst and process of the invention can be advantageously employed to yield products having comparatively high viscosity indexes. For example, the catalysts and process of the invention can be used to yield products having viscosity indexes in the range of from about 100 to about 125 or higher in higher yields and at lower reaction temperatures. It should also be noted that the production of an oil having an enhanced viscosity index can be achieved without sacrificing other desirable features of the process such as, for example, high yield of oil, or other desirable characteristics of the oil such as low aromatic content.

The hydrotreating process of the present invention utilizing the hydrotreating catalyst of the present invention may be conducted at temperatures in the range of from about 250°C to about 500°C, more specifically within the range of from about 300°C to about 425°C. Reactions also are conducted under pressures in the range of from 750 to 5000 psig (5.17 - 34.47 MPa gauge) and more specifically in the range of from 2000 to 3000 psig (13.79 - 20.68 MPa gauge). The liquid hourly space velocity (LHSV) can be varied over a wide range although generally from about 0.1 to about 10 volumes of crude lubricating oil stock per volume of catalyst per hour, and a hydrogen feed rate of from about 2000 to about 20,000 standard cubic feet (scf) per barrel of crude lubricating oil stock (356 - 3562 dm³/l) and preferably from 4000 to about 10,000 scf of hydrogen per barrel of crude oil stock (712 - 1781 dm³/l) are maintained during the reaction. It is not necessary that pure hydrogen be employed in the process, and a hydrogen-containing stream comprising from about 60% to about 99% of hydrogen is satisfactory. The hydrogen-containing streams generally available in refinery operations contain from about 85% to about 95% of hydrogen gas, and such streams are useful.

The particular operation conditions to be used in any specific hydrotreating operation will, of course, vary to a certain extent depending upon the properties of the charge stock being treated and the results desired. Accordingly, the operating conditions to be employed in the hydrotreating process should be selected so as to produce a hydrotreated material having the desired characteristics including higher viscosity index and reduced aromatics, sulfur and nitrogen content. Also, the operating conditions employed in the hydrotreating process must be selected, in conjunction with the catalyst, to reduce a degree of random carbon-to-carbon cleavage typical of hydrocracking and to minimize production of substantial amounts of lower boiling materials.

As mentioned above, the hydrotreating catalysts of the present invention are useful in treating crude oils for improving the viscosity index and reducing the amount of aromatics present. In practice, lubricating oil producers generally use multiple hydrotreating steps or stages on the crude oils. Generally, the function of the first stage is to improve the viscosity index of the lubricating oil (via hydrocracking) and to remove nitrogen, sulfur and metals. The second stage effects hydrogenation of the oil (which is generally dewaxed between the first and second stage) to improve its stability. Stabilization involves the conversion of unsaturated hydrocarbons such as olefins and aromatics to saturated materials such as paraffins and naphthenic materials. Stabilization, to a lesser extent, also involves removing objectionable elements from the lubricating feedstocks, and such impurities usually consist of sulfur, nitrogen, oxygen, halides and trace metals.

In a one stage or single pass operation, the oil and hydrogen generally are preheated to reaction temperature and passed through a series of catalyst beds in one or more reactors. The reactor effluent is cooled and separated into gas and liquid streams. Unreacted hydrogen is recycled. Since the overall reaction is exothermic, the temperature rise in each catalyst bed is controlled by either gas quench, liquid quench or indirect cooling between beds. The liquid stream passes to an atmospheric stripper where gaseous hydrocarbons and light fractions are removed. The bottoms fraction is charged to a vacuum tower for separation into the desired waxy lube products.

Although single stage operations are effective in hydrotreating crude oil base stocks, most commercial lubricating oil producers utilize multiple stage and multiple catalyst systems to achieve the desired conversion of the various aromatic-containing lubricating oil feedstocks to oils having the desired properties. Generally, multiple stage preparations will consist of two and sometimes three hydrogenation stages. Fig. 1 is a schematic flow diagram of a two stage process for hydrotreating a lubricating oil base stock. Because of the different catalytic functions of each of the stages, current practice requires the use of different catalysts in the two stages. The primary alteration of the components of the feedstock is accomplished in the first stage where a significant amount of cracking occurs in conjunction with hydrotreating. There is some reduction of aromatic content. As a result of these changes, the oil undergoes a desirable increase in the viscosity index. Thus, the performance of the first stage is measured by the yield and the viscosity index of the effluent. Some purification of the oil also occurs in the first stage. Thus, sulfur compounds are converted into hydrogen sulfide and other compounds through various desulfurization reactions. Nitrogen compounds are converted into ammonia and pure hydrocarbons through various denitrogenation reactions, and naphthenic acids are converted into naphthenes through various dehydration and decarboxylation reactions. As a result, the reactor effluent from the first stage shows a marked improvement in color, thermal stability and oxidation stability with some decrease in aromatic content.

In the second stage the hydrotreating catalyst saturates the desired aromatic compounds with emphasis on the 4, 5, 6 and greater aromatic rings. These hydrogenation reactions increase the naphthenic content of the oil. There is little or no change in the viscosity index of the oil as a result of the second stage treatment. When compared to the first stage, the second stage is more of a finishing or polishing step where mild hydrogenation occurs and product stability is improved.

Fig. 1 illustrates one two-stage process which is typical of two-stage processes currently being used for hydrotreating lubricating oils. In the process illustrated in Fig. 1, vacuum gas oil 10 (VGO) and hydrogen ($H_2$) 12 are fed to the first-stage reactor 14 which contains a hydrotreating catalyst. In a typical process, the pressure in the first stage is about 3000 psig (20.68 MPa gauge) and temperatures are in the range of 700-800°F (371 - 427°C). The effluent from the first-stage reactor 16 is subjected to vacuum distillation 18 to remove volatile materials, and the residue 20 is subjected to a solvent de-waxing step in a suitable apparatus 22 utilizing procedures well known to those skilled in the art. The de-waxed oil (DWO) 24 is mixed with additional hydrogen 26 and fed to the second stage reactor 28 which also contains a hydrotreating catalyst. Typically, the second stage reactor is operated at a temperature of from 500°F (260°C) to 600°F (316°C) at a pressure of about 3000 psig (20 - 68 MPa gauge). The effluent from the second-stage reactor 30 is the desired lubricating oil base stock.

As mentioned above, prior art processes generally have utilized different hydrotreating catalysts in the first and second stage reactors because of the two different processes and reactions which occur in the two stages. One of the unique features of the hydrotreating catalysts of this invention is that the catalyst can be used effectively in both stages, and, therefore, the use of the catalysts of this invention in both stages simplifies the hydrotreating processes and eliminates the need for maintaining an inventory of two separate catalysts. It has been discovered that the catalyst of the present invention is effective in a first-stage operation such as illustrated in Fig. 1, and the use of the catalyst results in effluents having excellent characteristics which are generally improved over the characteristics obtained with some of the presently commercially utilized catalysts.

In general, at given viscosity indexes, increased yields are obtained, and denitrogenation, dearomatization and desulfurization are superior. When used in the second stage of a two-stage hydrotreating process such as illustrated in Fig. 1, the catalyst of the present invention, as compared to some commercially available second-stage catalyst, results in increased removal of aromatics in the lubricating oil at lower operating temperatures.

The utility of the hydrotreating catalyst of the present invention on heavy gas oils is illustrated in the following example conducted on a Kuwait heavy vacuum gas oil (HVGO).

The Kuwait heavy vacuum gas oil is characterized as follows:

```
gravity, API                   18.4
sulfur content (wt.%)          3.52
nitrogen content (ppm)         1390
aromatic content (wt.%)        64
D-1160 vacuum dist.,°F
   (% over)
5                              715    (379°C)
10                             870    (466°C)
30                             969    (521°C)
50                             997    (536°C)
70                             995    (535°C)
90                             1050   (566°C)
```

For comparison purposes, the process also is conducted on the kuwait HVGO utilizing commercially available hydrotreating catalysts for the first and second stages such as described in U.S. Patents 3,078,238 and 3,046,218. The catalyst of the present invention utilized in this example is similar to the catalyst described in Example 1B.

The first stage reaction conditions utilized in this example are: temperature, 385-400°C; pressure, 2500 psig (17.24 MPa gauge); LHSV, 1.0 vol./vol./hr.; hydrogen flow rate, 7500 SCF/Bbl (1336 dm$^3$/l). When compared to a commercially available catalyst, the catalyst of Example 1B increases the yield of high viscosity index effluent and results in an increased reduction in the aromatics content, nitrogen content and sulfur content of the effluent.

After vacuum distillation and solvent dewaxing of the effluent from the first stage, the effluent is subjected to a second stage hydrotreating process as illustrated in Fig. 1 utilizing the catalyst of Example 1B as representative of the catalyst of the present invention. For comparison, the process also is conducted utilizing a commercially available catalyst generally recommended for use in such second stage reactor. The reaction conditions of the second stage are: temperature, 500-550°F (260 - 288°C); pressure, 2500 psi (17.24 MPa gauge); LHSV, 0.5 vol./vol./hr.; and hydrogen flow rate, 5000 SCF/Bbl (891 dm$^3$/l).

The goal of the second stage lube finishing is to impart stability against oxidation. Various criteria can be used to evaluate stability, and two common ones are aromatics content and UV absorbance. The results of this second stage reaction utilizing the catalyst of Example 1B compared to the commercially available catalyst demonstrate that the catalyst of the present invention produces an effluent oil containing significantly less aromatics, and the amount of aromatic contained in the effluent is reduced as the reaction temperature is increased from 500°F (260°C) to 525°F (274°C) and 550°F (288°C). The UV light stability of the effluent from the second stage utilizing the catalyst of the present invention is significantly improved over the UV light stability of the effluent obtained utilizing the commercial catalyst in the second stage.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A hydrotreating catalyst comprising at least one Group VI metal, metal oxide, or metal sulfide, and at least one Group VIII metal, metal oxide, or metal sulfide, supported on a carrier, characterised in that

   (A) the catalyst comprises from 10% to 35% by weight of combined metal, and the atomic ratio of the Group VIII metal to Group VI metal is in the range of from 0.5:1 to 2:1;

   (B) the carrier comprises from 0.5 to 10 weight percent of halogen, from 0.5 to 5% by weight of silica, and from 85 to 99% by weight of alumina; and

   (C) the catalyst has a median pore radius of from 30 to 65 Angstroms (3 to 6.5 nm), and a surface area of from 120 to 180m$^2$/g.

2. The catalyst of claim 1, characterised in that it comprises a mixture of Group VI metal oxide and metal sulfide and a mixture of Group VIII metal oxide and metal sulfide.

3. The catalyst of claim 1 or 2, characterised in that the catalyst contains from 15 to 35% by weight of combined metal.

4. The catalyst of claim 1 or 2, characterised in that the catalyst contains from 20 to 30% by weight of combined metal.

5. The catalyst of any of claims 1 to 4, characterised in that the halogen is fluorine.

6. The catalyst of any of claims 1 to 5, characterised in that the carrier contains from 1.5 to 5 weight percent of halogen.

7. The catalyst of any of claims 1 to 6, characterised in that the carrier comprises from 1 to 2.5% of silica.

8. The catalyst of any of claims 1 to 7, characterised in that the catalyst has a median pore radius of from 35 to 55 Angstroms (3.5 to 5.5 nm).

9. The catalyst of any of claims 1 to 8, characterised in that it has a surface area of from 125 to 170 m$^2$/g.

10. The catalyst of claim 1 or 2, characterised in that

    (A) the catalyst contains from 20 to 30% by weight of combined metal, and the atomic ratio of the Group VIII to Group VI metal is in the range of from 0.5:1 to 1.5:1;

    (B) the carrier comprises from 1 to 2.5% by weight of silica, from 1 to 5% by weight of fluorine and from 92.5 to 98% by weight of alumina; and

    (C) the catalyst has a median pore radius of from 30 to 50 Angstroms (3 to 5 nm) and a surface area of from 125 to 150 m$^2$/g.

11. The catalyst of any of claims 1 to 10, characterised in that the Group VIII metal is nickel and the Group VI metal is tungsten.

12. The catalyst of any of claims 1 to 11, characterised in that it contains from 24 to 26% by weight of combined metal.

13. The catalyst of any of claims 1 to 12, characterised in that the atomic ratio of Group VIII petal to Group VI metal is from 0.75 to 1.25.

14. The catalyst of claim 1, characterised in that it comprises nickel, nickel oxide or nickel sulfide, and tungsten, tungsten oxide or tungsten sulfide, supported on a carrier wherein

    (A) the catalyst contains from 24 to 26% by weight of combined metal and the atomic ratio of nickel to tungsten is 0.75 to 1.25;

    (B) the carrier comprises from 1.5 to 3.0% by weight of fluorine, from 1 to 2.5% by weight of silica and from 90 to 97.5% by weight of alumina; and

    (C) the catalyst has a median pore radius of from 35 to 50 Angstroms (3.5 to 5nm) and a surface area of from 125 to 145 m$^2$/g.

15. A process for enhancing lubricating oils and improving their viscosity index and/or reducing the aromatic content of the oil which comprises contacting a crude lubricating oil stock, e.g. a deasphalted residuum, with hydrogen under hydrogenating conditions including elevated temperatures and pressures in the presence of a hydrotreating catalyst comprising at least one Group VI metal, metal oxide or metal sulfide and at least one Group VIII metal, metal oxide or metal sulfide supported on a carrier, wherein

(A) the catalyst comprises from 10% to 35% by weight of combined metal, and the atomic ratio of the Group VIII metal to Group VI metal is in the range of from 0.5:1 to 2:1;

(B) the carrier comprises from 0.5 to 10 weight percent of halogen, from 0.5 to 5% by weight of silica, and from 85 to 99% by weight of alumina; and

(C) the catalyst has a median pore radius of from 30 to 65 Angstroms (3 to 6.5 nm), and a surface area of from 120 to 180m$^2$/g.

16. The process of claim 15, characterised in that the catalyst comprises a mixture of Group VI metal oxide and metal sulfide and a mixture of Group VIII metal oxide and metal sulfide.

17. The process of claim 15 or 16, characterised in that the catalyst contains from 15 to 35%, preferably from 20 to 30%, e.g. 24 to 26%, by weight of combined metal.

18. The process of claim 15, 16 or 17, characterised in that the halogen is fluorine.

19. The process of any of claims 15 to 18, characterised in that the carrier contains from 1.5 to 5 weight percent of halogen.

20. The process of any of claims 15 to 19, characterised in that the carrier comprises from 1 to 2.5% of silica.

21. The process of any of claims 15 to 20, characterised in that the catalyst has a median pore radius of from 35 to 55 Angstroms (3.5 to 5.5 nm).

22. The process of any of claims 15 to 21, characterised in that the catalyst has a surface area of from 125 to 170 m$^2$/g.

23. The process of claim 15 or 16, characterised in that

(A) the catalyst contains from 20 to 30% by weight of combined metal, and the atomic ratio of the Group VIII to Group VI metal is in the range of from 0.5:1 to 1.5:1;

(B) the carrier comprises from 1 to 2.5% by weight of silica, from 1 to 5% by weight of fluorine and from 92.5 to 98% by weight of alumina; and

(C) the catalyst has a median pore radius of from 30 to 50 Angstroms (3 to 5 nm) and a surface area of from 125 to 150 m$^2$/g.

24. The process of any of claims 15 to 23, characterised in that the Group VIII metal is nickel and the Group VI metal is tungsten.

25. The process of any of claims 15 to 24, characterised in that the atomic ratio of Group VIII metal to Group VI metal is from 0.75 to 1.25.

26. The process of claim 15, characterised in that the catalyst comprises nickel, nickel oxide or nickel sulfide, and tungsten, tungsten oxide or tungsten sulfide, supported on a carrier wherein

(A) the catalyst contains from 24 to 26% by weight of combined metal and the atomic ratio of nickel to tungsten is 0.75 to 1.25;

(B) the carrier comprises from 1.5 to 3.0% by weight of fluorine, from 1 to 2.5% by weight of silica and from 90 to 97.5% by weight of alumina; and

(C) the catalyst has a median pore radius of from 35 to 50 Angstroms (3.5 to 5nm) and a surface area of from 125 to 145 m$^2$/g.

27. The process of any of claims 15 to 26, characterised in that the contacting is conducted at a temperature in the range of from about 250°C to about 500°C and the pressure is in the range of from 750 to 5000 psig (5.17 to 34.47 MPa gauge).

28. The process of any of claims 15 to 27, characterised in that the hydrotreating catalyst is sulfided prior to use.

**Patentansprüche**

1. Hydrotreating-Katalysator, welcher mindestens ein Metall, Metalloxid oder Metallsulfid der Gruppe VI und mindestens ein Metall, Metalloxid oder Metallsulfid der Gruppe VIII auf einem Träger umfaßt, dadurch **gekennzeichnet,** daß

   (A) der Katalysator 10 bis 35 Gew.-% kombiniertes Metall umfaßt und das Atomverhältnis des Metalls der Gruppe VIII zu dem Metall der Gruppe VI im Bereich von 0,5:1 - 2:1 liegt;
   (B) der Träger 0,5 - 10 Gew.-% Halogen, 0,5 - 5 Gew.-% Siliziumdioxid und 85 - 99 Gew.-% Aluminiumoxid umfaßt; und
   (C) der Katalysator einen mittleren Porenradius von 30 - 65Å (3 - 6,5nm) und eine Oberfläche von 120 - 180m$^2$/g hat.

2. Katalysator nach Anspruch 1, dadurch gekennzeichnet, daß er ein Gemisch aus Metalloxid und Metallsulfid der Gruppe VI und ein Gemisch aus Metalloxid und Metallsulfid der Gruppe VIII umfaßt.

3. Katalysator nach Anspruch 1 oder 2, dadurch gekennzeichnet, daß der Katalysator 15 - 35 Gew.-% kombiniertes Metall enthält.

4. Katalysator nach Anspruch 1 oder 2, dadurch gekennzeichnet, daß der Katalysator 20 - 30 Gew.-% kombiniertes Metall enthält.

5. Katalysator nach einem der Ansprüche 1 bis 4, dadurch gekennzeichnet, daß das Halogen Fluor ist.

6. Katalysator nach einem der Ansprüche 1 bis 5, dadurch gekennzeichnet, daß der Träger 1,5 - 5 Gew.-% Halogen enthält.

7. Katalysator nach einem der Ansprüche 1 bis 6, dadurch gekennzeichnet, daß der Träger 1 - 2,5% Siliziumdioxid umfaßt.

8. Katalysator nach einem der Ansprüche 1 bis 7, dadurch gekennzeichnet, daß der Katalysator einen mittleren Porenradius von 35 - 55Å (3,5 - 5,5nm) hat.

9. Katalysator nach einem der Ansprüche 1 bis 8, dadurch gekennzeichnet, daß er eine Oberfläche von 125 - 170m$^2$/g hat.

10. Katalysator nach Anspruch 1 oder 2, dadurch gekennzeichnet, daß

    (A) der Katalysator 20 - 30 Gew.-% kombiniertes Metall enthält und das Atomverhältnis des Metalls der Gruppe VIII zu dem der Gruppe VI im Bereich von 0,5:1 - 1,5:1 liegt;
    (B) der Träger 1 - 2,5 Gew.-% Siliziumdioxid, 1 - 5 Gew.-% Fluor und 92,5 - 98 Gew.-% Aluminiumoxid umfaßt; und
    (C) der Katalysator einen mittleren Porenradius von 30 - 50Å (3 - 5nm) und eine Oberfläche von 125 - 150m$^2$/g hat.

11. Katalysator nach einem der Ansprüche 1 bis 10, dadurch gekennzeichnet, daß das Metall der Gruppe VIII Nickel ist und das Metall der Gruppe VI Wolfram ist.

12. Katalysator nach einem der Ansprüche 1 bis 11, dadurch gekennzeichnet, daß er 24 - 26 Gew.-% kombiniertes Metall enthält.

13. Katalysator nach einem der Ansprüche 1 bis 12, dadurch gekennzeichnet, daß das Atomverhältnis des Metalls der Gruppe VIII zu dem Metall der Gruppe VI 0,75 - 1,25 beträgt.

14. Katalysator nach Anspruch 1, dadurch gekennzeichnet, daß er Nickel, Nickeloxid oder Nickelsulfid und Wolfram, Wolframoxid oder Wolframsulfid auf einem Träger umfaßt, worin

    (A) der Katalysator 24 - 26 Gew.-% kombiniertes Metall enthält und das Atomverhältnis von Nickel zu Wolfram 0,75 - 1,25 ist;
    (B) der Träger 1,5 - 3,0 Gew.-% Fluor, 1 - 2,5 Gew.-% Siliziumdioxid und 90 - 97,5 Gew.-% Aluminiumoxid umfaßt; und
    (C) der Katalysator einen mittleren Porenradius von 35 - 50 Å (3,5 - 5nm) und eine Oberfläche von 125 - 145m$^2$/g hat.

15. Verfahren zum Verbessern von Schmierölen und zum Verbessern von ihrem Viskositätsindex und/oder Vermindern des Aromatengehalts des Öls, welches das in Kontaktbringen eines rohen Schmieröleinsatzmaterials, z. B. eines entasphaltierten Rückstands, mit Wasserstoff unter hydrierenden Bedingungen einschließlich erhöhter Temperaturen und Drücke in Gegenwart eines Hydrotreating-Katalysators, welcher mindestens ein Metall, Metalloxid oder Metallsulfid der Gruppe VI und mindestens ein Metall, Metalloxid oder Metallsulfid der Gruppe VIII auf einem Träger umfaßt, worin

(A) der Katalysator 10 - 35 Gew.-% kombiniertes Metall umfaßt und das Atomverhältnis des Metalls der Gruppe VIII zu dem Metall der Gruppe VI im Bereich von 0,5:1 - 2:1 liegt;

(B) der Träger 0,5 - 10 Gew.-% Halogen, 0,5 - 5 Gew.-% Siliziumdioxid und 85 - 99 Gew. -% Aluminiumoxid umfaßt; und

(C) der Katalysator einen mittleren Porenradius von 30 - 65Å (3 - 6,5nm) und eine Oberfläche von 120 - 180m$^2$/g hat, umfaßt.

16. Verfahren nach Anspruch 15, dadurch gekennzeichnet, daß der Katalysator ein Gemisch von Metalloxid und Metallsulfid der Gruppe VI und ein Gemisch von Metalloxid und Metallsulfid der Gruppe VIII umfaßt.

17. Verfahren nach Anspruch 15 oder 16, dadurch gekennzeichnet, daß der Katalysator 15 - 35 Gew. -%, vorzugsweise 20 - 30 Gew.-%, z. B. 24 - 26 Gew.-% kombiniertes Metall enthält.

18. Verfahren nach Anspruch 15, 16 oder 17, dadurch gekennzeichnet, daß das Halogen Fluor ist.

19. Verfahren nach einem der Ansprüche 15 bis 18, dadurch gekennzeichnet, daß der Träger 1,5 - 5 Gew.-% Halogen enthält.

20. Verfahren nach einem der Ansprüche 15 bis 19, dadurch gekennzeichnet, daß der Träger 1 - 2,5% Siliziumdioxid enthält.

21. Verfahren nach einem der Ansprüche 15 bis 20, dadurch gekennzeichnet, daß der Katalysator einen mittleren Porenradius von 35 - 55Å (3,5 - 5,5nm) hat.

22. Verfahren nach einem der Ansprüche 15 bis 21, dadurch gekennzeichnet, daß der Katalysator eine Oberfläche von 125 - 170m$^2$/g hat.

23. Verfahren nach Anspruch 15 oder 16, dadurch gekennzeichnet, daß

(A) der Katalysator 20 - 30 Gew.-% kombiniertes Metall enthält und das Atomverhältnis des Metalls der Gruppe VIII zu dem Metall der Gruppe VI im Bereich von 0,5:1 - 1,5:1 liegt;

(B) der Träger 1 - 2,5 Gew.-% Siliziumdioxid, 1 - 5 Gew.-% Fluor und 92,5 - 98 Gew.-% Aluminiumoxid umfaßt; und

(C) der Katalysator einen mittleren Porenradius von 30 - 50Å (3 - 5nm) und eine Oberfläche von 125 - 150m$^2$/g hat.

24. Verfahren nach einem der Ansprüche 15 bis 23, dadurch gekennzeichnet, daß das Metall der Gruppe VIII Nickel und das Metall der Gruppe VI Wolfram ist.

25. Verfahren nach einem der Ansprüche 15 bis 24, dadurch gekennzeichnet, daß das Atomverhältnis des Metalls der Gruppe VIII zu dem Metall der Gruppe VI 0,75 - 1,25 beträgt.

26. Verfahren nach Anspruch 15, dadurch gekennzeichnet, daß der Katalysator Nickel, Nickeloxid oder Nickelsulfid und Wolfram, Wolframoxid oder Wolframsulfid auf einem Träger umfaßt, worin

(A) der Katalysator 24 - 26 Gew.-% kombiniertes Metall enthält und das Atomverhältnis von Nickel zu Wolfram 0,75 - 1,25 beträgt;

(B) der Träger 1,5 - 3,0 Gew.-% Fluor, 1 - 2,5 Gew.-% Siliziumdioxid und 90 - 97,5 Gew.-% Aluminiumoxid umfaßt; und

(C) der Katalysator einen mittleren Porenradius von 35 - 50Å (3,5 - 5nm) und eine Oberfläche von 125 - 145m$^2$/g hat.

27. Verfahren nach einem der Ansprüche 15 bis 26, dadurch gekennzeichnet, daß das in Kontaktbringen bei einer Temperatur im Bereich von etwa 250°C bis etwa 500°C durchgeführt wird und der Druck im Bereich von 750 bis 5000psig (5,17 - 34,47MPa-Überdruckt) liegt.

**28.** Verfahren nach einem der Ansprüche 15 bis 27, dadurch gekennzeichnet, daß der Hydrotreating-Katalysator vor der Verwendung sulfidiert wird.

## Revendications

**1.** Catalyseur d'hydrotraitement comprenant au moins un sulfure métallique, un oxyde métallique ou un métal du groupe VI, et au moins un sulfure métallique, un oxyde métallique ou un métal du groupe VIII, fixés sur un support, caractérisé en ce que

(A) le catalyseur comprend de 10 % à 35 % en poids de métal combiné, et le rapport atomique du métal du groupe VIII au métal du groupe VI est compris dans l'intervalle de 0,5 : 1 à 2 : 1 ;

(B) le support comprend de 0,5 à 10 % en poids d'halogène, de 0,5 à 5 % en poids de silice et de 85 à 99 % en poids d'alumine ; et

(C) le catalyseur possède un rayon moyen des pores compris entre 30 et 65 Angströms (3 et 6,5 nm), et une aire spécifique de 120 à 180 m$^2$/g.

**2.** Catalyseur selon la revendication 1, caractérisé en ce qu'il comprend un mélange de sulfure de métal et d'oxyde de métal du groupe VI et un mélange de sulfure de métal et d'oxyde de métal du groupe VIII.

**3.** Catalyseur selon la revendication 1 ou 2, caractérisé en ce que le catalyseur contient de 15 à 35 % en poids de métal combiné.

**4.** Catalyseur selon la revendication 1 ou 2, caractérisé en ce que le catalyseur contient de 20 à 30 % en poids de métal combiné.

**5.** Catalyseur selon l'une quelconque des revendications 1 à 4, caractérisé en ce que l'halogène est le fluor.

**6.** Catalyseur selon l'une quelconque des revendications 1 à 5, caractérisé en ce que le support contient de 1,5 à 5 % en poids d'halogène.

**7.** Catalyseur selon l'une quelconque des revendications 1 à 6, caractérisé en ce que le support comprend de 1 à 2,5 % de silice.

**8.** Catalyseur selon l'une quelconque des revendications 1 à 7, caractérisé en ce que le catalyseur possède un rayon moyen des pores de 35 à 55 Angstroms (3,5 à 5,5 nm).

**9.** Catalyseur selon l'une quelconque des revendications 1 à 8, caractérisé en ce qu'il possède une aire spécifique comprise entre 125 et 170 m$^2$/g.

**10.** Catalyseur selon la revendication 1 ou 2, caractérisé en ce

(A) le catalyseur contient de 20 à 30 % en poids de métal combiné, et le rapport atomique du métal du groupe VIII au métal du groupe VI est compris dans l'intervalle allant de 0,5 : 1 à 1,5 : 1 ;

(B) le support comprend de 1 à 2,5 % en poids de silice, de 1 à 5 % en poids de fluor, et de 92,5 à 98 % d'alumine ; et

(C) le catalyseur possède un rayon moyen des pores de 30 à 50 Angströms (3 à 5 nm) et une aire spécifique de 125 à 150 m$^2$/g.

**11.** Catalyseur selon l'une quelconque des revendications 1 à 10, caractérisé en ce que le métal du groupe VIII est le nickel et le métal du groupe VI est le tungstène.

**12.** Catalyseur selon l'une quelconque des revendications 1 à 11, caractérisé en ce qu'il contient de 24 à 26 % en poids de métal combiné.

**13.** Catalyseur selon l'une quelconque des revendications 1 à 12, caractérisé en ce que le rapport atomique du métal du groupe VIII au métal du groupe VI est de 0,75 à 1,25.

**14.** Catalyseur selon la revendication 1, caractérisé en ce qu'il comprend du nickel, de l'oxyde de nickel ou du sulfure de nickel, et du tungstène, de l'oxyde de tungstène ou du sulfure de tungstène, fixés sur un support, dans lequel

(A) le catalyseur contient de 24 à 26 % en poids de métal combiné et le rapport atomique du nickel au tungstène est de 0,75 à 1,25 ;

(B) le support comprend de 1,5 à 3,0 % en poids de fluor, de 1 à 2,5 % en poids de silice et de 90 à 97,5 % en poids d'alumine ; et

(C) le catalyseur possède un rayon moyen des pores de 35 à 50 Angstroms (3,5 à 5 nm) et une aire spécifique de 125 à 145 m$^2$/g.

15. Procédé pour enrichir des huiles lubrifiantes et améliorer leur indice de viscosité et/ou réduire la teneur en aromatiques de l'huile, qui comprend la mise en contact d'une réserve brute d'huile lubrifiante, par exemple un résidu désalphalté, avec de l'hydrogène dans des conditions d'hydrogénation, y compris des températures et des pressions élevées, en présence d'un catalyseur d'hydrotraitement comprenant au moins un sulfure de métal, un oxyde de métal ou un métal du groupe VI et au moins un sulfure de métal, un oxyde de métal ou un métal du groupe VIII, fixés sur un support, dans lequel

(A) le catalyseur comprend de 10 % à 35 % en poids de métal combiné, et le rapport atomique du métal du groupe VIII au métal du groupe VI est compris dans l'intervalle de 0,5 : 1 à 2 : 1 ;

(B) le support comprend de 0,5 à 10 % en poids d'halogène, de 0,5 à 5 % en poids de silice et de 85 à 99 % en poids d'alumine ; et

(C) le catalyseur possède un rayon moyen de pores compris entre 30 et 65 Angströms (3 et 6,5 nm), et une aire spécifique de 120 à 180 m$^2$/g.

16. Procédé selon la revendication 15, caractérisé en ce que le catalyseur comprend un mélange de sulfure de métal et d'oxyde de métal du groupe VI et un mélange de sulfure de métal et d'oxyde de métal du groupe VIII.

17. Procédé selon la revendication 15 ou 16, caractérisé en ce que le catalyseur contient de 15 à 35 %, de préférence de 20 à 30 %, par exemple de 24 à 26 % en poids de métal combiné.

18. Procédé selon l'une quelconque des revendications 15, 16 ou 17, caractérisé en ce que l'halogène est le fluor.

19. Procédé selon l'une quelconque des revendications 15 à 18, caractérisé en ce que le support contient de 1,5 à 5 % en poids d'halogène.

20. Procédé selon l'une quelconque des revendications 15 à 19, caractérisé en ce que le support comprend de 1 à 2,5 % de silice.

21. Procédé selon l'une quelconque des revendications 15 à 20, caractérisé en ce que le catalyseur possède un rayon moyen de pores de 35 à 55 Angströms (3,5 à 5,5 nm).

22. Procédé selon l'une quelconque des revendications 15 à 21, caractérisé en ce que le catalyseur possède une aire spécifique de 125 à 170 m$^2$/g.

23. Procédé selon la revendication 15 ou 16, caractérisé en ce que

(A) le catalyseur contient de 20 à 30 % en poids de métal combiné, et le rapport atomique du métal du groupe VIII au métal du groupe VI est compris dans l'intervalle de 0,5 : 1 à 1,5 : 1 ;

(B) le support comprend de 1 à 2,5 % en poids de silice, de 1 à 5 % en poids de fluor et de 92,5 à 98 % en poids d'alumine ; et

(C) le catalyseur possède un rayon moyen de pores de 30 à 50 Angströms (3 à 5 nm) et une aire spécifique de 125 à 150 m$^2$/g.

24. Procédé selon l'une quelconque des revendications 15 à 23, caractérisé en ce que le métal du groupe VIII est le nickel et le métal du groupe VI est le tungstène.

25. Procédé selon l'une quelconque des revendications 15 à 24, caractérisé en ce que le rapport atomique du métal du groupe VIII au métal du groupe VI est de 0,75 à 1,25.

26. Procédé selon la revendication 15, caractérisé en ce que le catalyseur comprend du nickel, de l'oxyde de nickel ou du sulfure de nickel, et du tungstène, de l'oxyde de tungstène ou du sulfure de tungstène, fixés sur un support, dans lequel

(A) le catalyseur contient de 24 à 26 % en poids de métal combiné et le rapport atomique du nickel au tungstène est de 0,75 à 1,25 ;

(B) le support comprend de 1,5 à 3,0 % en poids de fluor, de 1 à 2,5 % en poids de silice et de 90 à 97,5 % en poids d'alumine ; et

(C) le catalyseur possède un rayon moyen de pores de 35 à 50 Angströms (3,5 à 5 nm) et une aire spécifique de 125 à 145 m²/g.

27. Procédé selon l'une quelconque des revendications 15 à 26, caractérisé en ce que l'on effectue la mise en contact à une température comprise dans l'intervalle allant d'environ 250°C à environ 500°C et en ce que la pression est comprise dans l'intervalle de 750 à 5000 psi-man. (5,17 à 34,47 MPa manométrique ).

28. Procédé selon l'une quelconque des revendications 15 à 27, caractérisé en ce que l'on sulfure le catalyseur d'hydrotraitement avant utilisation.